Europäisches Patentamt

European Patent Office

Office européen des brevets

(19)

(11) **EP 1 041 474 B1**

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(51) Int Cl.⁷: **G01C 19/00**, G05B 19/19

(21) Anmeldenummer: **00107234.7**

(22) Anmeldetag: **03.04.2000**

(54) **Messanordnung zur Regelung von ausladenden mechanischen Vorrichtungen wie Robotern oder Werkzeugmaschinen sowie Messverfahren dazu**

Measuring apparatus for controlling mechanically extending devices such as robots or machine tools and corresponding method

Dispositif de mesure pour appareils mechaniques à membres extensibles tel que robots ou machines outils, et méthode correspondante

(84) Benannte Vertragsstaaten:
**AT BE CH CY DE DK ES FI FR GB GR IE IT LI LU MC NL PT SE**

(30) Priorität: **01.04.1999 DE 19914843**
**21.04.1999 DE 19918140**

(43) Veröffentlichungstag der Anmeldung:
**04.10.2000 Patentblatt 2000/40**

(73) Patentinhaber: **Deutsches Zentrum für Luft- und Raumfahrt e.V.**
**53175 Bonn (DE)**

(72) Erfinder: **Stieler, Bernhard, Prof. Dr.**
**38104 Braunschweig (DE)**

(74) Vertreter: **Einsel, Martin, Dipl.-Phys.**
**Patentanwalt,**
**Jasperallee 1A**
**38102 Braunschweig (DE)**

(56) Entgegenhaltungen:
**WO-A-97/19888          US-A- 5 834 623**

**Beschreibung**

Die Erfindung betrifft eine Messanordnung zur Regelung von ausladenden mechanischen Vorrichtungen, insbesondere von Robotern, Werkzeugmaschinen und dergleichen, die wenigstens zwei zueinander längs einer geraden oder gekrümmten Bewegungslinie bewegliche Teile besitzen, sowie ein entsprechendes Messverfahren, dass insbesondere mit dieser Messanordnung durchgeführt werden kann.

Ausladende mechanische Vorrichtungen mit ortsfester Basis sind beispielsweise eingespannte Balken, Kräne, Bagger, Roboter und spezielle Werkzeugmaschinen.

Die Verstellung solcher Vorrichtungen und ihr Bezug zu Einflussgrößen ist häufig Gegenstand der Messtechnik. Bei eingespannten Balken kann die Verbiegung oder Torsion in Abhängigkeit von der Belastung oder Temperatur von Bedeutung sein. Bei Baggern, Vielgetenk-Robotern und Werkzeugmaschinen muss die Position und Richtung der Schaufel oder eines Werkzeugs am äußeren Ende der Vorrichtung mit Hilfe einer kinematischen Kette in einem begrenzten Arbeitsraum gesteuert werden.

Ereignisabhängige Verstellungen sind hierbei primär die Veränderungen der Gliederstellung der kinematischen Kette zueinander. Lineare Verschiebungen der Glieder zueinander sind zum Beispiel bei Hobelmaschinen zur Hin- und Herbewegung oder bei Pressen zur Auf- und Abbewegung anzutreffen. Bei Baggern und Robotern werden die Glieder häufig drehend zueinander bewegt.

Roboter, Werkzeugmaschinen und ähnliche Gerätschaften besitzen dementsprechend häufiger wenigstens zwei zueinander längs einer geraden oder gekrümmten Bewegungslinie bewegliche Teile. Diese Bewegungslinien können entweder durch rein lineare Verschiebung von zwei Bauteilen zueinander gebildet werden, etwa bei Hin- und Herbewegungen oder beispielsweise bei Pressen durch Auf- und Abbewegung. Bei rotierenden oder anderen Drehbewegungen sind diese Bewegungslinien kreisförmig oder aber auch teilkreisförmig. Um die Roboter oder Werkzeugmaschinen etc. in ihrem Bewegungsablauf steuern beziehungsweise regeln zu können, ist es erforderlich, dass die Stellung der beiden zueinander beweglichen Maschinenteile erfasst wird.

Die Steuerung macht Positionssensoren zwischen den Gliedern erforderlich. Derartige Sensoren sind bei Linearbewegungen etwa Längenmesssysteme und bei Drehbewegungen Drehgeber. E. J. Kreuzer, J. B. Lugtenburg, H. G. Meißner und A. Truckenbrodt in "Industrieroboter" (1994), Seiten 228 bis 229, weisen darauf hin, dass bisher bei Vielgelenk-Industrierobotern eine Kombination aus Drehgebern als Positionsmesssystem und Tachogeneratoren als Geschwindigkeitsmesssystem eingesetzt wird. Solche Sensoren sind in der Regel an den Grenzflächen zwischen den beiden beweglichen Teilen montiert und erfordern eine sehr genaue Montage.

Bei Belastungen können auch zueinander nicht bewegliche Teile, beispielsweise die beiden Enden des Arms eines Roboters bei Torsionsbeanspruchung, ereignisabhängige Verformungen und Verstellungen erfahren.

Belastungsabhängige Verformungen beeinflussen die Ermittlung der Endstellung des zu führenden Werkzeugteiles. Sie können aus der Stellungsmessung zwischen den einzelnen Gliedern nicht ermittelt werden. Aus diesem Grunde werden die beweglichen Teile einer kinematischen Kette möglichst starr gebaut, was mit hohem Gewicht verbunden ist. Auch sind die Sensoren zur Erfassung der Stellung der beweglichen Teile an den Grenzflächen und die Sensoren zur Erfassung ihrer zeitlichen Änderung verhältnismäßig schwer. Beide Aspekte begrenzen die Dynamik der beweglichen Teile. Die Sensoren besitzen verschiedene Messfehler, sie sind gerade dort eingebaut, wo häufig bauseitig Engpässe bestehen oder sie stören den eigentlichen Arbeitsvorgang.

In einem Konzept gemäß der DE 33 02 063 A1 werden zur Kompensation von last- und temperaturbedingten Fehlern an Werkzeug- oder Messmaschinen sowie an Industrie-Robotern diese Fehler vorab für alle möglichen Positionen, thermischen Zustände und Lastbedingungen ermittelt und in dem für die Kompensationsaufgabe zuständigen Rechner abgespeichert.

Aus der DE 36 14 122 C2 ist eine Anordnung bekannt, mit der eine elastische Verformung von Roboterarmen durch optische Strahlengänge zwischen den Gelenken erfasst und mit Hilfe eines optomechanischen Regelkreises kompensiert wird. Die dabei eingebrachte Mess- und Regeltechnik erfordert einen nicht unerheblichen Aufwand hinsichtlich Konstruktion, Fertigung und Justage und beeinträchtigt die Dynamik der Steuerung des "Tool Center Point (TCP)", dem Bezugspunkt, in dem die Position und Richtung des Werkzeuges vermessen wird.

Aufgabe der Erfindung ist es demgegenüber, eine Messanordnung vorzuschlagen, die eine leichtere Bauart und/oder eine höhere Dynamik ermöglicht, sowie ein entsprechendes Verfahren vorzuschlagen, das insbesondere mit einer solchen Messanordnung durchführbar ist.

Diese Aufgabe wird gelöst durch eine Messanordnung zur Regelung von Robotern, Werkzeugmaschinen und dergleichen, die wenigstens zwei zueinander längs einer geraden oder gekrümmten Bewegungslinie bewegliche Teile besitzen,

-    mit wenigstens einem inertialen Sensor an einem der bewegten Teile,
-    mit einem Signalgeber,
-    mit wenigstens zwei Signalempfängern, die längs der Bewegungslinie angeordnet sind und einen Abstand längs der Bewegungslinie aufweisen und dann, wenn das bewegliche Teil auf seiner Bewegungsbahn mit dem Signalgeber die wenigstens zwei Signalempfänger überstreicht, jeweils diesbezügliche Messwerte abgeben,

- mit einer Auswerteeinheit, welcher die Messwerte des wenigstens einen inertialen Sensors und der wenigstens zwei Signalempfänger zugeführt werden und welche die Orts- und Bewegungskoordinaten daraus und ggf. aus vorgegebenen Werten ermittelt und Werte für die Regelung der Bewegung des Roboters, der Werkzeugmaschine und dergleichen abgibt.

Bei einem Verfahren wird die Aufgabe dadurch gelöst, dass die Messwerte der wenigstens zwei Signalempfänger und des wenigstens einen inertialen Sensors der Auswerteeinheit zugeführt werden und dass die Auswerteeinheit aus diesen Messwerten und aus vorgegebenen Werten die Orts- und Bewegungskoordinaten ermittelt.

Während bei Industrierobotern im Stand der Technik recht kostspielige und komplizierte Positionsmesssysteme mit relativ hohem Gewicht eingesetzt werden müssen, können diese bei dem erfindungsgemäßen Konzept wegfallen beziehungsweise sich auf zwei Signalempfänger reduzieren. Diese müssen lediglich ein Ereignis feststellen oder detektieren, nämlich ob das bewegte Teil oder ein bestimmter Abschnitt davon gerade den Signalempfänger passiert beziehungsweise überstreicht oder nicht. Dies ist eine reine Ja/Nein-Detektion.

Messfehler können praktisch nicht auftreten und die Amplitude ist fast unerheblich. Simple Formen von Sensoren sind möglich, zum Beispiel Lichtschranken, Magnetfühler oder faseroptische Erkenner.

Statt der Tachogeneratoren als Geschwindigkeitsmesssysteme werden jetzt Inertialsensoren eingesetzt, also insbesondere Kreisel oder Beschleunigungsmesser. Kreisel als Winkelmesser sind als solche beispielsweise aus der EP 0 457 200 B1 bekannt.

E. von Hinüber, B. Diewald, H. Janocha berichten in "Kalibrieren von Industrierobotern mit einem Inertialsystem", MSR Magazin (1993), Seite 40 bis 44, über ein Konzept und erzielbare Genauigkeiten, wenn komplette inertiale Navigationssysteme (INS) eingesetzt werden, deren inertiale Messeinheit (IMU) am Bezugspunkt (TCP) montiert ist. Diese Messeinheit besteht aus drei Kreiseln und drei Beschleunigungsmessern. Diese Inertialsensoren sollen zur Kalibrierung des Endeffektors eingesetzt werden, wofür nur kurze Zeiträume erforderlich sind.

Die gleiche Anordnung wird auch in der DE 30 39 400 A1 beschrieben, wobei das Justieren der inertialen Messeinheit in vorbestimmten Indexpositionen vorgeschlagen wird. Das bedeutet für den operationellen Einsatz eine Einschränkung.

Aus der WO 97/19888 A1 ist ein Kransystem bekannt. Bei diesem Kransystem ist an einer Lastaufnahmevorrichtung eine inertiale Messeinheit montiert. Vorgesehen sind außerdem Zusatzsensoren zur Positions- und Richtungsregelung der pendelnden Last in Bezug auf das Kranportal. Dieser Vorschlag ist auf einen sehr speziellen Anwendungsfall beschränkt.

In der US-PS 5 834 623 wird eine Kalibrierung einer Werkzeugmaschine vorgeschlagen. Diese Kalibrierung erfolgt durch Wiederholungsmessungen der Orientierung eines Werkzeugschlittens in Bezug auf das Maschinenbett. Diese Wiederhoiungsmessungen werden mit Hilfe einer inertialen Messeinheit an bekannten Positionen zur nachträglichen Kalibrierung der Schlittenführung vorgenommen. Dieses Konzept benötigt einen vorgeschriebenen Bewegungsablauf und ist ebenfalls auf einen sehr speziellen Anwendungsfall beschränkt.

Dem operationellen und praktischen Einsatz von vollständigen Inertialsystemen stehen allerdings erhebliche Kosten und Schwierigkeiten bei der Messdatenverarbeitung entgegen. Die Positionierung des Bezugspunktes (TCP) im Submillimeterbereich erfordert erfahrungsgemäß extrem genaue und teure Sensoren. Die vorliegende Erfindung zeigt demgegenüber einen wirtschaftlicheren Lösungsweg auf.

Im Unterschied zu dem genannten Einsatz von kompletten Inertialsystemen am Roboter-TCP wird der Erfindung nach für dessen Steuerung der strenge Zusammenhang zwischen der Geometrie der starren und auch elastischen kinematischen Kette und der TCP Position und Richtung ausgenutzt. Einzelne Inertialsensoren werden auf die einzelnen Glieder der Kette verteilt, oder es werden gar nur Inertialsensoren am äußeren Ende der kinematischen Kette vorgesehen, deren Anzahl sich aus den zu vermessenden Freiheitsgrade ergibt; zum Beispiel ein Beschleunigungsmesser und zwei Kreisel bei einer Linearverstellung mit überlagerter Biegung und Torsion. Bestandteil der Erfindung ist auch das Verfahren zur Integration der Signale für die ereignisabhängigen Verstellungen, so aus den Positionssensoren zwischen den Gliedern der kinematischen Kette; aus den Inertialsensoren einschließlich der Signale proportional der angreifenden Belastung, wenn die kinematische Kette als flexibel anzusehen ist.

Signale proportional der Belastung können beispielsweise aus Belastungsmessungen am TCP, aus den Strommessungen eines oder aller Motore zwischen den Gliedern der kinematischen Kette oder aus den Messungen der Verformung eines oder aller Glieder der kinematischen Kette mit Hilfe von Dehnungsmessstreifen generiert werden.

Aufgrund der hohen Messauflösung inertialer Sensoren kann bei der Neukonstruktion von Robotern, Werkzeug-, Baumaschinen und dergleichen die Anforderung an die Auflösung der heute eingesetzten Positionssensoren drastisch reduziert werden. Die Erfindung beinhaltet auch das Konzept solcher Positionssensoren extrem niedriger Auflösung, die im Folgenden zur besseren Unterscheidung als "Punktuelle Stützsensoren" bezeichnet werden. Sie geben beispielsweise lediglich an 2 Punkten innerhalb des Bewegungsbereiches zweier Glieder der kinematischen Kette eine Messung als Relativ-Positionsreferenz an die integrierte Verarbeitung der Messsignale ab. Da die Inertialsensoren Positions- und Geschwindigkeitsänderungen besser erfassen als die herkömmlichen Tachogeneratoren, kann auf letztere dann auch gänzlich verzichtet werden.

Durch den Einsatz der inertialen Sensoren ist es möglich, im Unterschied zu Längenmesssystemen oder Drehgebem, die Bewegung eines Maschinenteils gegenüber dem Inertialraum und nicht gegenüber dem zugehörigen Gegenstück zu bestimmen. So können Inertialsensoren an beliebigen Stellen des bewegten Teils montiert werden, nicht nur wie die Längenmesssysteme oder Drehgeber aus dem Stand der Technik unmittelbar an den Grenzflächen. Dies erleichtert sowohl die Fertigung der gesamten Einrichtung als auch die Reparatur wesentlich. Inertialsensoren haben ein geringeres Gewicht als herkömmliche Sensoren und bieten entscheidende Vorteile hinsichtlich Erfassung der kinematischen Zustandsgrößen der Elemente und ihrer elastischen Verformungen. Dies entspräche der Tendenz zum Bau von leichten Werkzeugmaschinen und Robotern mit hoher Dynamik.

Bei der in der Erfindung beschriebenen Messanordnung werden die heute eingesetzten Positions- und Geschwindigkeitssensoren durch inertiale Sensoren (Beschleunigungsmesser, Kreisel) ergänzt oder gar weitgehend ersetzt, und ein Messsignal für ein verformungswirksames Ereignis wird in das Verfahren einbezogen. Mit der Messanordnung ist ein neuartiges Verfahren der Signalauswertung zur Selbstkalibrierung des Messsystems einschließlich der Verformung infolge Biegung und Torsion verbunden. Als Ergebnis liegen im Rechner hochgenaue Schätzungen für die wahre Auslenkung zwischen den Gliedern der kinematischen Kette sowie für die belastungsabhängige Verformung der Glieder in numerischer Form vor als Basis für die Steuerung der Bezugsposition (TCP) und Richtung.

Die Erfindung ermöglicht, für Neukonstruktionen eine flexible und leichtere Bauart der kinematischen Ketten vorzusehen, was in einer höheren Dynamik und reduziertem Energieverbrauch resultiert; weiterhin ist ein niedrigerer Preis zur Fertigung und Instandhaltung zu erwarten, wie weiter unten beschrieben. Die Erfindung kann in vorhandene Geräte nachträglich integriert werden oder ermöglicht eine schnelle und genaue Kalibrierung des Gerätes vor der Auslieferung.

Folgende Charakteristiken von Inertialsensoren werden bei der Erfindung ausgeschöpft:

- die Messsignale sind proportional den absoluten Orts- und Richtungsänderungen des Messpunktes der kinematischen Kette, was neben den Verstellungen der Glieder die Auswirkung der elastischen Verformung einbezieht,

- die Messsignale haben eine hohe Auflösung,

- die Inertialsensoren sind einfach an das zu vermessende Teil zu montieren mit Vorteilen hinsichtlich Fertigung und Wartung der Endgeräte.

Inertialsensoren als solche sind, wie erwähnt, bekannt. Es handelt sich beispielsweise um Beschleunigungsmesser oder auch Kreisel. Ihrer Anwendung stehen bisher Vorurteile und erhebliche Schwierigkeiten bei der Messdatenverarbeitung entgegen. Problematisch ist nämlich das Fehlerverhalten dieser Inertialsensoren. Diese Probleme sind bei Linearpositionen einerseits und Winkelpositionen andererseits ähnlich und haben eine zeitabhängige und eine stellungsabhängige Messabweichung zur Folge.

Diese bei Inertialsensoren noch möglichen beziehungsweise im Folgenden noch näher erläuterten Messfehler können durch den Einsatz der mindestens zwei Signalempfänger aufgehoben werden. Die Signalempfänger sind gewissermaßen punktuelle Sensoren, die an einem konkreten Ort das Auftreten eines Signals feststellen.

Diese beiden Sensoren können beispielsweise Lichtschranken sein, die beim Passieren jeweils dieses Ereignis melden, der "Messwert" ist dabei letztlich nur der Zeitpunkt des Passierens, da der Ort ja bekannt ist.

Bevorzugt aber ist es, wenn die wenigstens zwei Signalempfänger jeweils an dem gleichen der beiden Teile angeordnet sind und dass wenigstens ein Signalgeber vorgesehen ist, der an dem anderen der beiden Teile längs der gleichen Bewegungslinie angeordnet ist und auf seiner Bewegungsbahn die wenigstens zwei Signalempfänger überstreicht.

Signalempfänger können auch hierfür sehr einfach aufgebaut werden. Sie sollen erfindungsgemäß längs der Bewegungslinie der beiden zueinander beweglichen Teile des Roboters beziehungsweise der Werkzeugmaschine eingesetzt werden. Nimmt man zum Beispiel ein bewegtes und ein feststehendes Teil einer Werkzeugmaschine an, hat also zwei relativ zueinander bewegte Teile, so kann beispielsweise der Signalgeber an dem bewegten Teil und die beiden Signalempfänger an dem feststehenden Teil angeordnet werden. Bei einer Bewegung des beweglichen Teils überstreicht der Signalgeber bei seiner Bewegung längs der Bewegungslinie zu unterschiedlichen Zeitpunkten die beiden Signalempfänger. Das von dem Signalgeber abgegebene Signal wird von den beiden Signalempfängern zu einem bestimmten Zeitpunkt aufgefangen und in diesem Moment eine exakte Ort-Zeitbestimmung vorgenommen. Diese kann, wie in den unten erörterten mathematischen Gleichungen noch gezeigt wird zur Messfehlerkorrektur verwendet werden.

Die beiden Signalempfänger samt Signalgeber sind ebenso sehr leicht und einfach sowie kostengünstig aufbaubar und können recht unkompliziert an derjenigen Stelle der beiden zueinander beweglichen Teile angeordnet werden, wo sie am wenigsten stören.

Bevorzugt weisen die inertialen Sensoren Kreisel und/oder Beschleunigungsmesser auf, während die Signalempfänger bevorzugt optische Sensoren und die Signalgeber lichtabgebende Elemente aufweisen.

Als optische Sensoren können dabei bevorzugt Differenzialphotodioden eingesetzt werden, die lichtabgebenden Elemente können von einer Lichtquelle gespeiste Enden von Lichtleitfasern sein. Dies führt dazu, dass an der unmittelbaren Position der Bewegungslinie, also an der Grenzlinie zwischen den beiden bewegten Teilen, lediglich das nur minimalen Raumbedarf besitzende Ende einer Lichtleitfaser eingesetzt werden muss während die Lichtquelle selbst davon deutlich beabstandet auf der Rückseite des gleichen Teils angeordnet sein kann.

Sind zusätzlich auch noch Teile des Roboters oder der Werkzeugmaschine flexible kinematische Elemente, beispielsweise unter Belastung sich biegende Arme des Roboters, so werden bevorzugt zusätzlich Dehnungsmessstreifen für diese kinematischen Elemente vorgesehen.

Besonders bevorzugt ist dabei vorgesehen, dass jedes flexible kinematische Element mit zwei inertialen Sensoren ausgerüstet wird, um die Details für die Messkorrekturen weiter zu verbessern.

Kreisel sind zur Erfassung der elastischen Verformung von kinematischen Ketten oder ausladenden mechanischen Gebilden besonders vorteilhaft, da sich Verformungen in erster Linie in Biege- oder Torsionswinkeln niederschlagen, worauf Kreisel direkt reagieren.

Die Erfindung ist auch anwendbar auf die Erfassung der Verformung von ausladenden mechanischen Vorrichtungen, deren geometrische Änderung keinen Steuereingriffen unterliegt. Das ist zum Beispiel bei kinematischen Ketten der Fall, deren Belastung Verformungen außerhalb der Bewegungsebene verursacht, so zum Beispiel eine Torsion bei dem Arm eines Roboters. Die Erfassung dieser Verstellungen gelingt durch das Anbringen zusätzlicher Inertialsensoren, insbesondere von Kreiseln, in der Nähe des Bezugspunktes (TCP).

Ein weiterer Anwendungsfall ist die Ermittlung der Verformung eines eingespannten Balkens als Folge von Belastungen. Dies ist zwar auch das Ziel des Vorschlages in der EP 0 457 200 B1, doch unterscheidet sich die vorliegende Erfindung dadurch, dass keine Wiederholungsmessungen unter identischen Randbedingungen erforderlich sind.

Die verfahrensmäßige Auswertung für die hier genannten Anwendungen der Erfindung ist identisch mit den oben genannten Beispielen. Die nicht vorhandenen Messungen aus Positionssensoren werden ersetzt durch die ohne den Einfluss einer ereignisabhängigen Verstellung vorgegebene Bezugsrichtung, und die ereignisabhängige Verstellung wird von den Kreiseln ermittelt.

Die erfindungsgemäßen Verfahren zur Integration von Messsignalen aus punktuellen Sensoren, Inertialsensoren und Signalen zur Erfassung relevanter Ereignisse mit dem Ziel der Steuerung der kinematischen Ketten von Robotern. Werkzeug-, Baumaschinen und dergleichen sind natürlich anwendbar auf solche Geräte, in denen Positionsmesssysteme hoher Auflösung zum Einsatz gelangen, wie die heute weitgehend im Einsatz befindlichen Linearmesssysteme und Drehgeber. Mit ihnen kann bei starren Gliedern der kinematischen Ketten ja quasikontinuierlich eine Absolut-Positionsreferenz ihrer Glieder berechnet werden ohne Einsatz der Inertialsensoren. Ihre Verwendung erbringt jedoch schon unter diesen Voraussetzungen folgende Vorteile:

- zur Überwachung der Positionsmesssysteme stehen redundante Informationen zur Verfügung, die nach der Fertigung beziehungsweise im operationellen Einsatz auch zur Kalibrierung der Positionsmesssysteme eingesetzt werden können,

- die dynamische Steuerung der kinematischen Kette wird erheblich verbessert, da hochwertige Messsignale proportional der Positions- und Geschwindigkeitsänderung verfügbar sind,

- Einsparungen an Preis und Gewicht der kinematischen Kette sind möglich durch Ersatz der Tachogeneratoren mit heute verfügbaren mikromechanischen und preisgünstigen Inertialsensoren.

Die weiter oben vorgestellten Möglichkeiten, die die Erfindung zur Steuerung insbesondere von flexiblen kinematischer Ketten in Verbindung mit punktuellen Sensoren erbringt, bleiben auch beim Einsatz von Drehgebem mit hoher Auflösung erhalten. Einige der unten angegebenen Messgleichungen vereinfachen sich, da von den Drehgebem Messsignale quasikontinuierlich in das Messsystem eingespeist werden.

Auch zur Ermittlung ereignisabhängiger Verformungen kinematischer Ketten mit linear beweglichen Gliedern ist der Einsatz von Kreiseln, die an den äußeren Enden der Glieder montiert sind, besonders vorteilhaft. Die Messachsen der Kreisel sind parallel zu der zu erwartenden Verformung montiert, und als Referenzsignale zur Kreiselkalibrierung und Erfassung von Biegung und/oder Torsion steht die Grundausrichtung der Kette - beispielsweise die Ausrichtung des ersten Gliedes in Bezug auf die ortsfeste Richtung - zur Verfügung. Ähnlich wie oben beschrieben, kann jedes Glied der Kette kreiselbestückt sein oder auch nur das äußerste.

Einschränkungen hinsichtlich der Bewegungsansteuerung entfallen auch wenn nur ein Kreisel zum Einsatz gelangt. Zur Ermittlung der TCP-Position sind Messungen für die ereignisabhängigen Verstellungen (Retativ-Positionen aller Glieder, Kreisel, Verformung) quasikontinuierlich verfügbar.

Im Folgenden wird zunächst anhand der Zeichnungen ein Beispiel für einen erfindungsgemäßen Aufbau beschrieben:

Es zeigen:

**Fig. 1** eine schematische Darstellung einer Werkzeugmaschine mit zwei linear zueinander beweglichen Teilen;

**Fig. 2** eine schematische Darstellung eines Roboter-Gelenkes mit zwei zueinander relativ drehbaren Teilen;

**Fig. 3** einen Roboterarm aus mehreren relativ zueinander beweglichen und jeweils flexiblen kinematischen Elementen in unbelasteter Form;

**Fig. 4** den Roboterarm aus Figur 3 unter Belastung;

**Fig. 5** die Darstellung aus Figur 4 unter Betonung anderer Einzelheiten;

**Fig. 6** eine schematische Darstellung mit mehreren linear zueinander beweglichen Elementen;

**Fig. 7** einen eingespannten Balken, an dem die Erfindung eingesetzt wird; und

**Fig. 8** einen Roboterarm mit ähnlichen Verhältnissen wie in Figur 7.

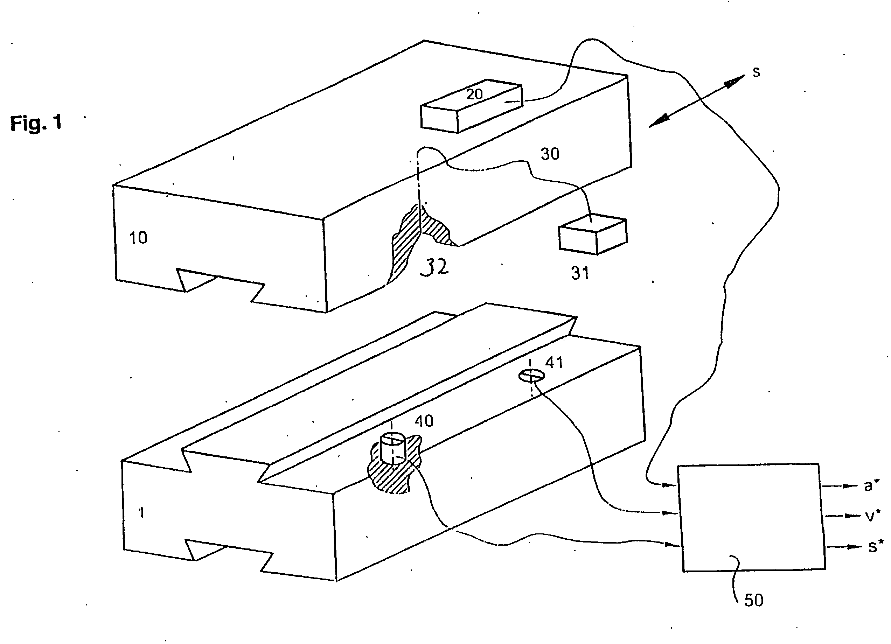

**Fig. 1** zeigt eine Werkzeugmaschine, bei der relativ zu einem feststehenden ersten Teil 1 ein zweites bewegliches Teil 10 vorgesehen ist. Das Teil 10 kann in Richtung des Pfeiles s auf der Oberseite des ersten Teiles 1 hin- und hergeschoben werden; hier ist eine Schwalbenschwanzführung vorgesehen, diverse andere Bewegungsmöglichkeiten sind natürlich möglich. Die Bewegungslinie in diesem Falle ist eine Gerade beziehungsweise eine Strecke. Die dargestellte Werkzeugmaschine könnte beispielsweise ein Hobel sein, wobei hier lediglich schematisch diese Teile 1, 10 angedeutet sind.

Fest an dem beweglichen Teil 10 angeordnet ist ein Inertialsensor 20. Dies ist in diesem Falle ein Beschleunigungsmesser. Der Beschleunigungsmesser gibt seine Messdaten an eine Auswerteeinheit 50 ab, die unten rechts rein schematisch dargestellt ist und beispielsweise ein Computer oder eine Steuer- oder Regelschaltung sein kann. Die von dem Beschleunigungsmesser beziehungsweise Inertialsensor 20 aufgenommenen Beschleunigungsdaten betreffend die Beschleunigung a, werden in Signale umgewandelt und in der Auswerteeinheit 50 ausgewertet und wie noch zu beschreiben ist, korrigiert.

In der dargestellten Ausführungsform ist eine Lichtquelle 31 an der beweglichen Einheit angeordnet, die Licht in eine Lichtleitfaser 30 abgibt. Diese Lichtleitfaser 30 läuft durch das bewegliche Teil 10 und endet an der dem Teil 1 benachbarten Oberfläche. Dieses Ende der Lichtleitfaser 30 stellt zugleich den Signalgeber 32 dar. In der Fig. 1 ist hier zur besseren Erkennung dieser Bereich weggebrochen dargestellt.

An dem feststehenden Teil 1 der Werkzeugmaschine sind zwei Signalempfänger 40 und 41 angeordnet. Es sind beides beispielsweise Differentialphotodioden. Das aus dem Ende der Lichtleitfaser 30, also beim Signalgeber 32, austretende Licht fällt jeweils auf die Signalempfänger 40 beziehungsweise 41, wenn diese gerade von diesem Signalgeber 32 überstrichen werden. Überstreicht der Signalgeber 32 gerade keinen Sensor, so wird auch kein entsprechendes Signal aufgefangen. Die beiden Signalempfänger 40 und 41 liegen genau in der einen, geraden Bewegungslinie, die von dem Signalgeber überstrichen wird.

Die Signalempfänger 40 und 41 sind ebenfalls mit der Auswerteeinheit 50 verbunden und geben dieser ein zeitabhängiges Signal ab. Geben sie ein Signal, steht in diesem Bereich der exakte Ort des Signalgebers 32 fest, sonst könnte hier kein Signal empfangen werden. Damit steht auch ein Referenzwert für die Position des Teils 1 relativ zum Teil 10 fest.

Die ihr zugeführten Daten wandelt die Auswerteeinheit 50 in korrigierte Messwerte für Beschleunigung, Geschwindigkeit und Ort des beweglichen Teiles 10 um.

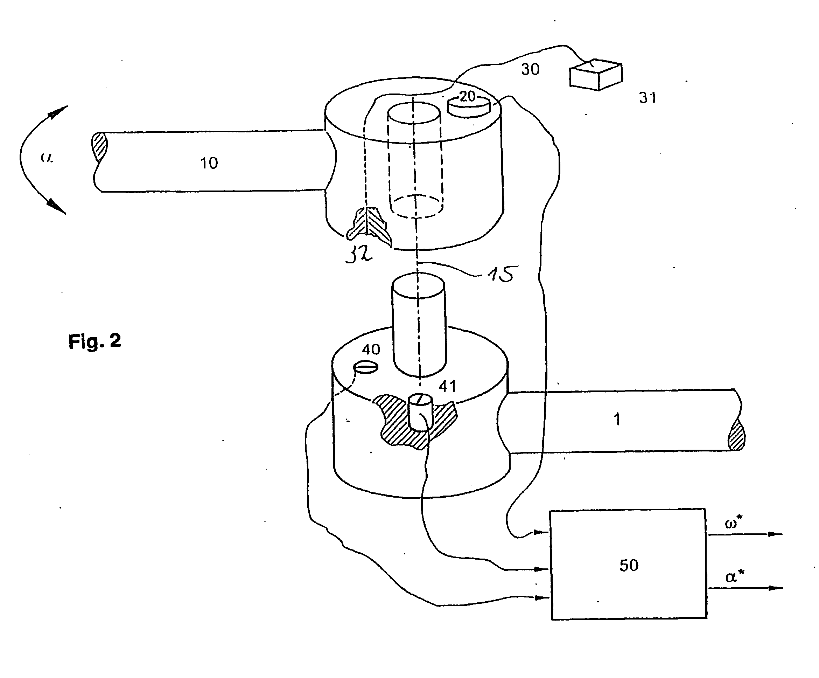

In ähnlicher Form arbeitet die Konzeption in **Fig. 2.** Gezeigt ist ein Gelenk mit einem ersten Teil 1, hier einem rohrähnlichen Roboterarm, und einem zweiten Teil 10, das relativ zu dem ersten Teil 1 beweglich ist, hier drehbar um eine Drehachse 15. Hier ist ein Inertialsensor 20 in Form eines Kreisels vorgesehen, der mit seiner Messachse parallel zu der Drehachse zwischen den Teilen 1 und 10 angeordnet ist. Ferner ist ebenfalls eine Lichtquelle 31 mit einer Lichtleitfaser 30 und einem Signalgeber 32 zu erkennen, die ähnlich der Ausführungsform in Fig. 1 angesprochen sind.

An dem ersten, feststehenden Teil 1 sind wieder zwei Signalempfänger 40 und 41 zu erkennen. Die verschiedenen Sensoren geben ihre Signale wieder an die Auswerteeinheit 50, die korrigierte Werte für den Drehwinkel $\alpha$ und die Drehrate $\omega$ berechnet.

Denkbar wäre es auch, die Signalempfänger in dem beweglichen Teil 10 und die Signalgeber 32 in den jeweils feststehenden Teilen 1 anzuordnen.

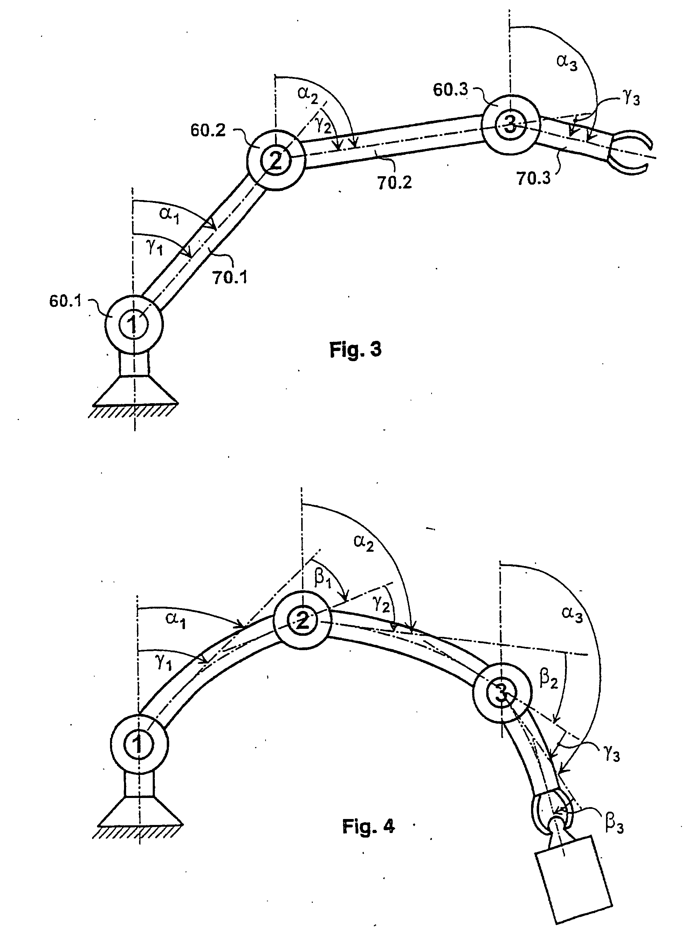

**Fig. 3** zeigt einen Roboterarm mit mehreren zueinander beweglichen Teilen. Die beweglichen Teile sind dabei mit 70.1, 70.2 und 70.3 bezeichnet; diese entsprechen allerdings den relativ zueinander beweglichen Teilen 1 und 10 aus den vorherigen Beispielen. Je zwei dieser beweglichen Teile bilden wiederum ein Paar wie vorstehend. Dabei sind jeweils Drehgelenke 60.1, 60.2 und 60.3 vorgesehen.

Zusätzlich angedeutet ist noch, dass zu dem Drehwinkel $\alpha$ eines Teiles gegenüber dem Inertialraum auch Drehwinkel relativ zueinander für die jeweils zwei Teile existieren, die mit $\gamma$ bezeichnet sind.

In **Fig. 4** ist noch zusätzlich angedeutet, wie sich die einzelnen Teile 70 verhalten, wenn es sich um flexible kinematische Elemente handelt. Die flexible Verformung ist durch einen Winkel $\beta$ erfasst.

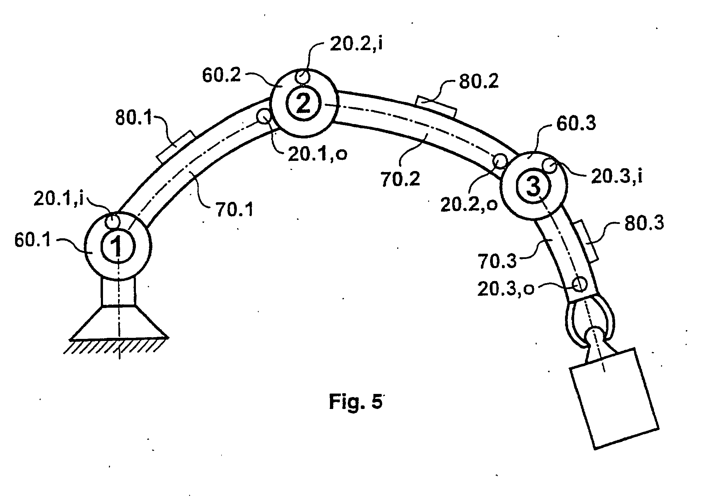

**Fig. 5** zeigt die Darstellung aus Fig. 4, wobei diesmal zusätzlich angedeutet ist, wo bei einem solchen System mit flexiblen kinematischen Elementen die Inertialsensoren 20 angeordnet sein könnten. Dabei sind die verschiedenen Inertialsensoren 20 mit verschiedenen Indices beziehungsweise Unterkennzeichnungen voneinander unterschieden.

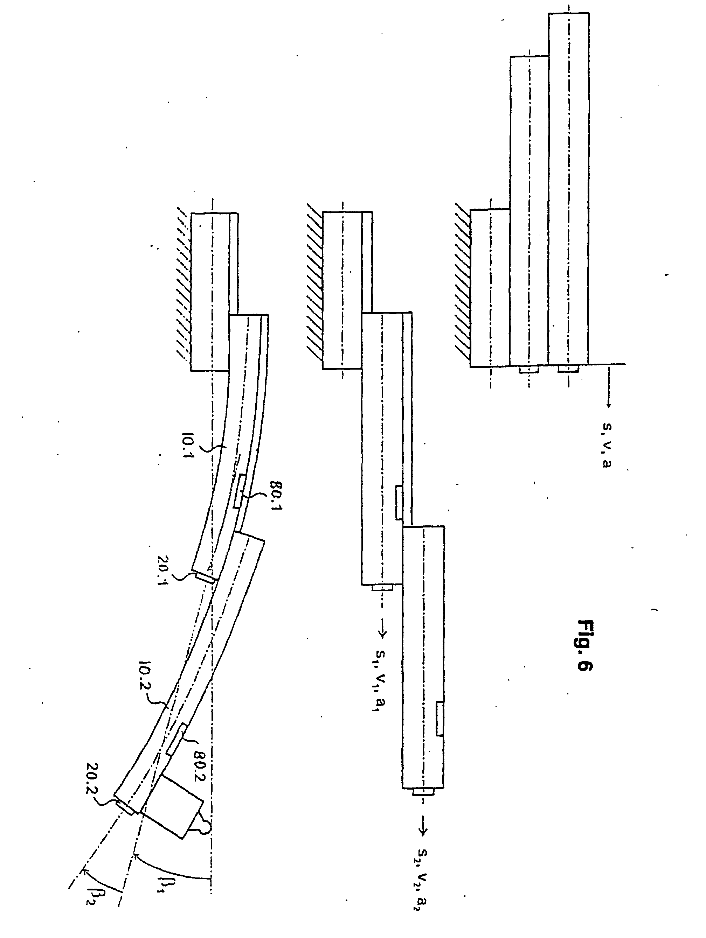

**Fig. 6** schließlich zeigt ein ähnlich komplexes System, bei dem drei Teile relativ zueinander linear verschiebbar sind, aber ebenfalls flexible kinematische Elemente darstellen. Auch hier werden Kreisel als Inertialsensoren 20 zur Erfassung der Verformung vorgesehen. In den Figuren 5 und 6 sind zusätzlich Dehnungsmessstreifen 80 eingezeichnet, die Signale proportional der Verformungen $\beta$ der kinematischen Kette infolge Belastungen ausgeben. Wie oben schon angedeutet, sind solche Signale auch aus der Messung der Belastung oder Verformung nur eines Gliedes der kinematischen Kette zu generieren, und nach den Gesetzen der Mechanik ist die Belastung der anderen zu berechnen. Schließlich kann auch der Strom zur Betätigung der Bewegungsmotore oder auch das Signal eines am Bezugspunkt für die Position und Richtung des Werkzeugs (auch "Tool Center Point", TCP genannt) gemessenen Belastungsvektors mit Umrechnung in die Belastung der Glieder dafür Verwendung finden.

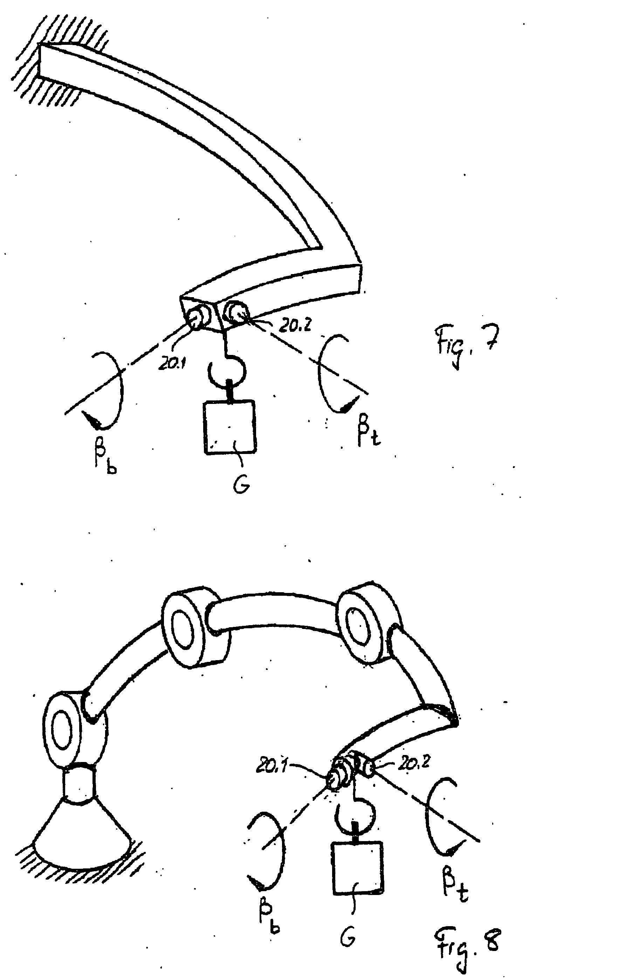

Die in den Figuren 1 bis 6 dargestellten Beispiele betreffen solche Fallgestaltungen, in denen die Effekte in nur einer Messebene eintreten. Ein Einsatz in dreidimensionalen Gestaltungen ist möglich wie die in **Fig. 7** beispielhaft dargestellt ist. Ein Balken ist hier eingespannt und bildet auf diese Weise die ausladende mechanische Vorrichtung. An seinem äußersten Ende ist ein Gewicht G angehängt. Das Gewicht ist lediglich ein Beispiel für die Kräfte, die auf die ausladende mechanische Vorrichtung wirken können. Der Balken wird jetzt durch die auf ihn wirkenden Kräfte gebogen. Dieser Biegung $\beta_b$ wird zusätzlich eine Torsion $\beta_t$ überlagert. Zwei Kreisel 20.1 und 20.2 als Inertialsensoren führen jetzt ihre Messungen durch. Auf diesen Messungen beruht jetzt die Erfassung von Biegung $\beta_b$ und Torsion $\beta_t$.

**Fig. 8** zeigt nun die Übertragung der Verhältnisse aus Figur 7 auf eine kinematische Kette, hier als Teil eines Roboters. Zu erkennen ist wiederum eine ortsfeste Basis und ein Gewicht G am äußersten Ende der kinematischen Kette. Die Minimalausstattung zur Erfassung der unterschiedlichen Biegung $\beta_{bn}$ und Torsion $\beta_{tn}$ sämtlicher n kinematischer Elemente beruht auf den Messungen $\beta_b$ und $\beta_t$ der zwei dargestellten Inertialsensoren, der Kreisel 20.1 und 20.2, den in dieser Figur 8.nicht dargestellten Positionssensoren (punktuellen Stützsensoren) in den Gelenken (siehe Figur 2) und den vorgegebenen Werten beziehungsweise den vorstehend erörterten Möglichkeiten zur Belastungs- und Verformungsmessung.

Die verschiedenen Teile von Werkzeugmaschinen oder Robotern, ob starr oder flexibel, werden zu Positions- und Bewegungsmessungen mit Kreiseln und/oder Beschleunigungsmessern als Inertialsensoren ausgerüstet. Ein Signalgeber gibt an mindestens zwei bekannten Positionen im Bewegungsbereich eines jeden Elementes ein Signal ab. Bei starren kinematischen Elementen ist bereits diese Sensorik ausreichend, um die genaue Position und Bewegung der kinematischen Elemente zu ermitteln.

Für flexible kinematische Elemente werden zusätzlich Signale für die Verformung einbezogen, die bevorzugt aus Dehnungsmessstreifen stammen, aber auch aus den Torque-Motoren von Robotergelenken bezogen werden können. Bei den kinematischen Elementen wird durch das Anbringen von jeweils mindestens zwei Inertialsensoren, also beispielsweise Kreiseln, an bevorzugt den beiden Enden der biegeverformten kinematischen Elemente eine Steigerung der Genauigkeit und Zuverlässigkeit gewonnen. Auch hier werden die Signale zusammen mit denen aus den Torque-Motoren oder Dehnungsmessstreifen in einer Auswerteeinheit verarbeitet.

Ein mögliches Messverfahren der erfindungsgemäßen Anordnung wird anhand der mathematischen Messdaten-Auswertung im Folgenden erörtert:

Die Ermittlung der geradlinig verlaufenden Linearposition s* eines beweglichen Teils kann aus dem Messsignal a* eines Beschleunigungsmessers durch zweimalige Integration erfolgen:

$$v*(t) = v_0^\bullet + \int_0^t a*(\tau)\,d\tau, \tag{1}$$

$$s*(t) = s_0^\bullet + \int_0^t v*(\tau)\,d\tau. \tag{2}$$

Die Winkelposition eines bewegten Teils kann durch einmalige Integration des Messsignals $\dot{\alpha}*$ eines Kreisels bei Bewegung in einer Ebene erfasst werden:

$$\alpha*(t) = \alpha_0^\bullet + \int_0^t \ddot{\alpha}*(\tau)\,d\tau \tag{3}$$

In diesen Beziehungen kennzeichnet der * eine gemessene oder berechnete Größe, die in der Regel fehlerbehaftet ist.

Die gemessenen Beschleunigungen $a*$ Drehraten $\omega*$ und die berechneten Lineargeschwindigkeiten $v*$ werden für die Regelung einer hochgenauen Linear- und Winkelposition benötigt. Auch aus diesem Grunde ist die Verwendung von inertialsensoren zur Vermessung von Bewegungen mit hoher Dynamik von Vorteil. Bei der ausschließlichen Verwendung von Positionssensoren müssen diese Signale durch Differentiation gewonnen werden, was mit einer Steigerung des Rauschens infolge begrenzter Auflösung der Positionssensoren verbunden ist.

Die Schwierigkeiten in der Signalverarbeitung von Inertialsensoren haben ihre Ursache zum Einen in ihrer oben angedeuteten Physik der absoluten Vermessung von Bewegungsvorgängen, das heißt die Vermessung gegenüber dem Inertialraum sowie ihre Umrechnung in Bewegungsvorgänge gegenüber der Erde. Zum Ändern haben sie ihre Ursache in dem Fehlerverhalten der Sensoren. Beide Ursachen haben bei der Ermittlung der Linear- und Winkelposition durch Inertialsensoren eine zeit- und stellungsabhängige Messabweichung zur Folge.

Für die oben genannten Messsignale der Beschleunigungsmesser und Kreisel ist bei kompensiertem Einfluss der Fallbeschleunigung g und der Erddrehung $\Omega$ anzusetzen:

$$a* = a + \delta a = (1 + \kappa_a)a + b \tag{4a}$$

$$\delta a = \delta\ddot{s} = \kappa_a\,a + b \tag{4b}$$

$$\dot{\alpha}* = \dot{\alpha} + \delta\dot{\alpha} = (1+\kappa_\alpha)\dot{\alpha} + d \tag{5a}$$

$$\delta\dot{\alpha} = \dot{\varepsilon} = \kappa_\alpha\dot{\alpha} + d, \tag{5b}$$

mit $a,\ \dot{\alpha}$ = exakte Messgröße, $\delta a,\ \delta\dot{\alpha} = \dot{\varepsilon}$, = Messfehler, $\kappa_a,\ \kappa_\alpha$ = relativer Skalenfaktorfehler und $b,\ d$ = "Nullpunktsfehler" der Sensoren. Hierin ist vorausgesetzt worden, dass die Skalenfaktorfehler $\kappa_a,\ \kappa_\alpha$ und Nullpunktsfehler $B,\ D$ zwar unbekannt aber in begrenzten Zeitabschnitten im Mittel konstant sind; den Nullpunktsfehlern sei ein Rauschen $w_{B,D}$ überlagert, das heißt in den Gleichungen (4) und (5) ist zu setzen:

$$b = B + w_B \tag{6}$$

$$d = D + w_D. \tag{7}$$

Aus den obigen Beziehungen ist leicht einsehbar, dass ein Skalenfaktorfehler $\kappa$ zu einem stellungsabhängigen Fehler in der Position führt und ein Nullpunktsfehler zu einem zeitabhängigen Fehler. Das integrierte Rauschen ergibt einen Messfehler mit stochastischem Zeitverlauf, der als "Random Walk" bezeichnet wird.

Bei konstanter Richtung der Sensor-Messachse gegenüber dem Vektor der Fallbeschleunigung $\underline{q}$ oder der Erddrehung $\underline{\Omega}$ ist auch deren Einfluss auf die Messung konstant und kann als ein konstanter Versatz von B und D aufgefasst werden. Das ist zum Beispiel der Fall bei einer Werkzeugmaschine mit ortsfestem Bett und einem darauf linear geführten Bewegungselement (zum Beispiel Hobelmaschine) oder einem feststehenden Roboter mit Führung über Drehgelenke, die sich nur in einer Ebene bewegen.

Bei veränderlicher Richtung der Sensor-Messachse gegenüber $\underline{q}$ und $\underline{\Omega}$ besteht bei erhöhten Ansprüchen an die Positionsgenauigkeit des Endeffektors die Anforderung der Kompensation des jeweiligen Anteils von $\underline{q}$ und $\underline{\Omega}$ in der Messung des einzelnen Sensors, was durch zentrale Verarbeitung der Signale aus allen Sensoren nach den Regeln der Inertialnavigation möglich ist.

Steht die kinematische Kette nicht auf einer ortsfesten Basis, wie beispielsweise in einem Weltraumlabor, so muss in die Datenverarbeitung die zeitliche Änderung zwischen der für die Inertialsensoren maßgeblichen absoluten Basis und der Weltraumlabor-Basis einbezogen werden, was mit einem inertialen Navigationssystem möglich ist. Im Folgenden wird das nicht weiter ausgeführt.

Die vorliegende Erfindung erläutert lediglich das Prinzip der Erfassung und Kompensation der Sensor-messfehler *B, D,* $\kappa_{a,\omega}$ und der elastischen Verformung $\beta$ zur verbesserten TCP-Steuerung.

Die Kalibrierung der genannten Sensorfehler setzt ihre Beobachtbarkeit und Referenzmessungen voraus. Die Beobachtbarkeit der Nullpunktfehler mit ihren zeitlichen Auswirkungen auf die Position erfordert Referenzmessungen in bekannten Zeitdifferenzen, die Beobachtbarkeit der Skalenfaktorfehler mit ihren stellungsabhängigen Auswirkungen auf die Position erfordert Referenzmessungen mit bekannten Positionsdifferenzen, die jeweils von null verschieden sein müssen. Dieser Sachverhalt liefert einen Hinweis auf die Auslegung der in Fig. 1 und 2 skizzierten Punktuellen Stützsensoren (Positionsmesssysteme niedriger Auflösung); hier wird während der Bewegung eines Gliedes in mindestens 2 Positionen relativ zu dem nächst inneren Glied - den Linearpositionen $\zeta$ oder den Winkelpositionen. $\eta$ - ein Signal abgeben. Wird die Nullstellung des bewegten Teils in Fig. 1 und 2 während des Arbeitsprozesses öfters angefahren, so kann selbstverständlich auch diese in den Kalibrierungsprozess einbezogen werden. Zur Kalibrierung der Fehlerparameter eines inertialen Sensors kann dann auf einen der Signalempfänger 40 oder 41 verzichtet werden, da die Nullstellung bereits eine Relativ-Positionsreferenz liefert.

Bei Positionsmesssystemen hoher Auflösung ist der letztgenannte Sachverhalt stets erfüllt. Wenn technisch und preislich vertretbar, sind diese gegenüber den hier diskutierten Punktuellen Stützsensoren natürlich im Vorteil, da zum Einen die Gestaltung des Arbeitsprozesses flexibler gehandhabt werden kann und zum Andern zur Kalibrierung der Inertialsensoren ständig Relativ-Positionsreferenzen zur Verfügung stehen. Die Rolle der Inertialsensoren ist unter diesen Voraussetzungen in der Kalibrierung der Relativ-Positionsreferenzen, der Erfassung dynamischer Zustandsgrößen der kinematischen Kette und in dem Wegfall der Tachogeneratoren zu sehen. Insbesondere liegt die Bedeutung des Einsatzes von Inertialsensoren in der autarken Erfassung ereignisabhängiger Verstellungen, wie den elastischen Verformungen der einzelnen Glieder, die durch die Positionssensoren nicht messbar sind. Dies ist eine Voraussetzung zur genauen Berechnung der TCP-Position (Bezugspunkt, s. o.) und Richtung. Weiter unten wird hierauf nochmals eingegangen.

Die Signale der am äußeren Ende des beweglichen Teil der kinematischen Kette montierten Inertialsensoren - bei mehreren Gliedern am äußeren Ende des jeweils äußeren Gliedes - werden im Rechner, wie oben angedeutet, zur inertialen Position s* oder $\omega$* aufintegriert. Parallel dazu erfolgt die Schätzung und Korrektur der Sensorfehler, beispielsweise mit Hilfe eines Kalman-Filters, was im Folgenden beispielhaft beschrieben wird.

Am Beispiel der Messungen von Punktuellen Stützsensoren in den Gelenken eines starren Vielgelenk-Roboters und den Messungen von Kreiseln, die an den Außenenden der Glieder montiert sind, soll ein erfindungsgemäßes Konzept der Integration sämtlicher Messsignale aufgezeigt werden. Mit der Kreisetmontage an den Außenenden werden Voraussetzungen zur Erfassung elastischer Verformungen erfüllt, was weiter unten beschrieben wird.

Aus dem Fehlermodell 5b für die Messung eines Kreisels:

$$\dot{\varepsilon} = \kappa_{\alpha}\,\dot{\alpha} + d = \kappa_{\alpha}\,\dot{\alpha} + D + w_D \qquad (8)$$

wird der systematische Anteil in Form des Zustandsvektors geschrieben:

$$\underline{x} = (\varepsilon\ D\ \kappa_{\alpha})^{T}. \qquad (9)$$

In der Messfehler-Dynamik werden $D$, $\kappa_\alpha$ als zufällige Konstanten modelliert.

In Gl. 8 wird $w_D$ als unkorelliertes stochastisches Rauschen angesehen mit dem Erwartungswert null (E[w] =0). Dessen Varianz und die Abtastzeit der Messung bestimmen den "Random Walk" Koeffizienten: $r^2 = \sigma^2_D\, T_s$, der für die Schätzung des Zustandsvektors von Bedeutung ist.

Wird beispielsweise im ersten, das heißt innersten Roboter-Gelenk ($n = 1$ mit $n$ = laufende Nummer der Gelenke und Arme von innen nach außen gezählt) der Signalempfänger 40 oder 41 (s. Fig. 2) überstrichen, so steht für die Kreiselmessung $\alpha^*_1$ eine Referenz $\eta^*_1$ zur Verfügung, und die in einem Kalman Filter auszuwertende Messgleichung zur Schätzung des Kreiselfehler $\varepsilon_1$ lautet:

$$\underline{y} = \alpha^* - \eta^*$$
$$= \varepsilon_1 + \delta\eta \tag{10}$$

wobei $\delta\eta_1$ der Fehler in der Erfassung der Relativ-Positionsreferenz ist.

Im Zustand des Stillstandes dieses Roboter-Gelenkes steht zwar keine Relativ-Positionsreferenz zur Verfügung, aber im Rechner, dem dieser Zustand durch die Signale der Bewegungssteuerung ja bekannt ist, wird die Information "Stillstand" zur Kalibrierung des zeitabhängigen Fehlers des Kreisels in diesem Gelenk 1 herangezogen. Dieses Kalibrierverfahren kann als "Zero Velocity Updating (ZUPT)" bezeichnet werden. Dabei wird die Tatsache ausgenutzt, dass sich bei Stillstand das inertiale Messsignal nicht ändern darf. Die Messgleichung lautet:

$$\underline{y} = \Delta\dot{\alpha}^*_1 + \delta\alpha_1$$
$$= D_1\,\Delta t + \delta\alpha_1 \tag{11}$$

mit $\Delta\alpha^*_1$ = gemessene Winkeldifferenz in dem Messtakt $\Delta t$ und $\delta\alpha_1$ dem Messfehler in diesem Gelenk.

Die obigen Zusammenhänge sind zunächst nur gültig für das erste als ortsfest angenommene Gelenk des Roboters. Für die nächst äußeren Gelenke ($n > 1$) muss als Basis für die Kreiselphysik der Zusammenhang zwischen absoluter (hier ortsfester) und gelenkfester Bezugsrichtung bekannt sein. Letztere verändert sich nach Fig. 3 bei starren Roboter-Armen mit der Summe der Verstellwinkel $\gamma_n$ der inneren $n$ in einer gemeinsamen Ebene sich drehenden Gelenke. Als absolute Referenzposition $\eta$ des Gelenkes N wird eingeführt:

$$\tilde{\eta}_N = \eta_N + \sum_{n=1}^{N-1} \gamma_n . \tag{12}$$

Dessen absoluter Verstellwinkel (Einbeziehung des Verstellwinkels des Gelenkes N) soll von dem Kreisel im Gelenk N sensiert werden:

$$\tilde{\gamma}_N = \alpha_N = \sum_{n=1}^{N} \gamma_n . \tag{13}$$

Das Ausgangssignal dieses Kreisels ist demgegenüber:

$$\dot{\alpha}^*_N = \tilde{\gamma}_N + \varepsilon_N , \tag{14}$$

wobei für den Messfehler $\varepsilon_N$ das Modell aus 8 zugrundegelegt wird.

Bei Verfügbarkeit einer Relativ-Positionsreferenz aus dem Punktuellen Stützsensor im Gelenk N ist der absolute Verstellwinkel nach 13 der absoluten Referenzposition nach 12 plus dem Fehleranteil der Signalauslesung gleichzusetzen:

$$\widetilde{\gamma}_N = \widetilde{\eta}_N + \delta\eta_N. \qquad (15)$$

$\widetilde{\eta}_N$ kann nach 12 nur mit Hilfe der Kreiselmessungen $\alpha^{*}_{N-1}$ des nächst inneren Gelenkes ermittelt werden, und es ergibt sich folgende Messgleichung:

$$\underline{y} = \overset{\bullet}{\alpha}_N - \overset{\bullet}{\alpha}_{N-1} - \eta_N$$
$$= \varepsilon_N - \varepsilon_{N-1} + \delta\eta_N \qquad (16)$$

Sie liefert die Überlagerung der Messfehler der benachbarten Kreisel N und N - 1.

Für das erste Glied der Gelenkkette, das heißt $N = 1$, ist in Gleichung 16 $\alpha^{*}_{N-1} = 0$ und $\varepsilon_{N-1} = 0$ zu setzen, da hier der Kreiselfehler $\varepsilon_1$ direkt messbar wird.

Aus der Beziehung 16 ist zu entnehmen, dass die Kalibrierung der Kreisel in den äußeren Gelenken von der Messunsicherheit des nächst inneren Gelenkes abhängt. Die Messgenauigkeit eines mehrarmigen mit Kreiseln bestückten starren Roboters scheint somit von innen nach außen abzunehmen, jedoch werden in Hinblick auf die Positionsgenauigkeit des Roboter-TCP auch die Genauigkeitsanforderungen an die Erfassung der Winkelposition der äußeren Gelenke geringer.

Hilfreich in diesem Zusammenhang ist die Tatsache, dass die Bewegung eines Gelenkes N auch von allen äußeren Gelenken n > N sensiert wird. Das bedeutet beispielsweise, dass alle äußeren Gelenke die gleiche Drehung $\overset{\bullet}{\alpha}$ ausführen wie das Gelenk N, wenn es selbst und die dazwischenliegenden Gelenke keine eigene Drehbewegung ausführen. Diese Tatsache kann im Rechner wie folgt ausgenutzt werden:

Das Gelenk L sei in bezug auf Gelenk N ein äußeres Gelenk (L > N) und dieses sowie die dazwischenliegenden Gelenke werden nicht bewegt. Dafür ist eine ständig auszuwertende Messgleichung die der Winkeldifferenzen in dem Bewegurigs-Zeitraum $\Delta t$ :

$$\underline{y} = \Delta\overset{\bullet}{\alpha}_N - \Delta\overset{\bullet}{\alpha}_L$$
$$= (D_N - D_L)\,\Delta t + \kappa_N\,\Delta\overset{\bullet}{\alpha}_N - \kappa_L\,\Delta\overset{\bullet}{\alpha}_L + \delta\alpha \qquad (17)$$

Die 2. Zeile zeigt, welche Kreiselfehler-Parameter durch die Messung beobachtet werden.

Ähnlich wie oben in Verbindung mit 11 beschrieben, lässt sich auch bei einem mehrgelenkigen Roboter der Stillstand eines oder mehrerer Gelenke zur Kalibrierung der zeitabhängigen Sensorfehler ausnutzen. Die obige Beziehung 17 vereinfacht sich dann entsprechend - zur Anwendung von "Zero Velocity Updating" im Gelenk N entfallen in diesen Gleichungen alle Variablen mit dem Index L.

Die Messgleichung (17) dient nicht nur der Genauigkeitssteigerung, sondern auch der gegenseitigen Überwachung der Sensoren in den Gelenken, da bei Ausfall eines Sensors die Winkeldifferenzmessung gesetzte Grenzen übersteigen wird.

Der letztgenannte Sachverhalt, dass bei Bewegung eines inneren Gelenkes und Stillstand der äußeren die äußeren Inertialsensoren die Bewegung des bewegten Gelenkes sensieren, kann auch dazu ausgenutzt werden, nur einen Inertialsensor an das äußere Ende der kinematischen Kette zu montieren und ihre Steuerung aus Integration seiner Messungen mit denen aus den Punktuellen Stützsensoren in den Trennflächen der Kettenglieder vorzunehmen. Da nur ein Inertialsensor verfügbar ist, müssen zur kontinuierlichen Ermittlung der Glied-Positionen Einschränkungen hinsichtlich der Glied-Ansteuerung in Kauf genommen werden: es darf nicht mehr als ein Glied zu gleichen Zeit bewegt werden. Diese Einschränkung existiert nur im Zusammenspiel mit Punktuellen Stützsensoren, bei denen die kontinuierliche Ermittlung der Position zwischen den Gelenken und damit der TCP- (Bezugspunkt)Position und Richtung primär auf den Inertialsensoren beruht.

Der Sachverhalt soll wiederum am starren Roboter mit M Gelenken erläutert werden. Der einzige Kreisel ist am äußeren Ende des Roboters nahe den TCP montiert und reagiert somit auf die Bewegung aller inneren Gelenke. Um seine Messung $\overset{\bullet}{\alpha}^{*}$ in dem Zeitinkrement $t_0 \le t \le t_1$ der Bewegung des Gelenkes N und der dazu äußeren Gelenke ($N \le n \le M$) auch eindeutig zuordnen zu können, muss den anderen Gelenken "Stillstand" kommandiert werden, das heißt für n < N ist:

$$\overset{*}{\alpha}_n(t_1) = \overset{*}{\alpha}_n(t_0). \tag{18a}$$

Für das Gelenk N und die dazu äußeren (N ≤ n ≤ M) berechnet sich die absolute Winkelstellung nach:

$$\dot{\alpha}_n(t_1) = \dot{\alpha}_n(t_0) + \int_{t_0}^{t_1} \dot{\alpha} \, d\tau. \tag{18b}$$

Während für die inneren Gelenke (n < N) die Winkelfehler infolge der Drift D und des Skalenfaktorfehlers κ des Kreisels für das Zeitinkrement $t_0$ bis $t_1$ konstant bleiben, wachsen sie für das Gelenk N und die äußeren (N ≤ n ≤ M) entsprechend 18b an. Die Modellierung der Winkelfehler $\varepsilon_n$ der M Glieder des starren Roboters muss das berücksichtigen mit dem auf D und κ zurückgeführten Ansatz der unterschiedlichen Winkelfehler der M Gelenke:

$$\underline{x} = (\varepsilon_1 ... \varepsilon_n ... \varepsilon_M \, D \, \kappa)^T. \tag{19}$$

Die Dynamik jedes einzelnen Winkelfehlers wird beschrieben durch:

$$\dot{\varepsilon}_n = D|_n + \kappa_n \, \dot{\alpha}|_n. \tag{20}$$

Hierin bedeuten $D|_n$ und $\dot{\alpha}|_n$ die im Gelenk wirksamen Anteile der von D und $\dot{\alpha}$, die nur dann von Null verschieden sind, wenn das Gelenk n das bewegte Gelenk ist oder sich in Bezug dazu außen befindet.

Der Inertialsensor am äußeren Ende der kinematischen Kette wird kalibriert wie es oben für die an den einzelnen Gliedern montierten Sensoren beschrieben ist: steht im Gelenk N eine Relativpositionsreferenz zur Verfügung, so dienen die Gln. 10 oder 16 als Messgleichungen zur Schätzung der Drift und des Skalenfaktorfehlers dieses einen Inertiatsensors. Die Auswertung der Messdifferenzen benachbarter Kreisel nach Gl. 17 entfällt hier natürlich, da diese sich auf den gleichen Sensor beziehen und nicht auf verschiedene wie oben.

Bei einer hochgenauen Steuerung der Position und Richtung des TCP am äußeren Ende einer kinematischen Kette darf diese in der Regel nicht als starr angesehen werden; vielmehr muss der Einfluss einer Belastung am TCP berücksichtigt werden, deren Auswirkung in Fig. 4 skizziert ist.

Die Erfindung soll wiederum am Beispiel des mehrgelenkigen Roboters beschrieben werden. Die hier gefundenen Zusammenhänge sind übertragbar auf die Erfassung der belastungsabhängigen Verformungen des Roboters in der zur Arbeitsebene 2. und 3. Dimension, auf kinematische Ketten, die linear bewegt werden oder auch auf ausladende mechanische Vorrichtungen, deren ereignisabhängige Verstellung beispielsweise ausschließlich durch Belastungs- oder Temperatureinflüsse hervorgerufen wird.

Nach Fig. 4 wird im Vergleich zu Fig. 3 die elastische Verbiegung der kinematischen Kette durch den Biegewinkel $\beta_n$, der am äußeren Ende des Gliedes n, gemessen wird. Er wird als Maß für die Biegelinie und der dadurch verursachten Positionsänderung des nächsten Gelenkes n+1 angesehen, woraus sich die Positionsänderung des TCP ermitteln lässt. Um $\beta_n$ in die Messung des Kreisels am Gelenk einzubeziehen, wird er am äußeren Ende des Gelenkes montiert. Es wird weiter unten auch eine Erweiterung der Erfindung auf den Einsatz nur eines Kreisels beschrieben; dann ist dieser am äußersten Ende der kinematischen Kette vorzugsweise in der Nähe des TCP montiert. Diese Ausführungsform ist eine Erweiterung der oben erörterten.

Die Erfindung setzt voraus, dass der Signalverarbeitung des Messsystems Signale für sämtliche ereignisabhängigen Verstellungen verfügbar gemacht werden, das sind auch Signale proportional der Verformung der Glieder der kinematischen Kette oder ein Signal proportional der angreifenden Belastung der kinematischen Kette.

Signale proportional der Verformung lassen sich aus Dehnungsmessstreifen, die an den Gliedern der kinematischen Kette angebracht sind, herleiten.

Signale proportional der angreifenden Belastung können beispielsweise aus dem Strom eines Bewegungsmotors der Gelenke abgeleitet werden, dessen interne Reibung vernachlässigbar ist. Auch ist dafür ein Belastungssensor, montiert in der Nähe des TCP, einsetzbar. In allen Fällen können nach den Gesetzen der Mechanik die an den einzelnen Gliedern der kinematischen Kette gemessenen Verhältnisse auf diejenigen aller Glieder umgerechnet werden. Zwischen der an den Gelenken n angreifenden Belastung $u_n$ und der Verformung $\beta_n$ besteht über den Proportionalitätsfaktor $K_n$ ein Zusammenhang:

$$\beta_n = K_n\, u_n. \tag{21}$$

Die elastische Verformung $\beta_{N-1}$ des nächst inneren Gliedes N-1 der kinematischen Kette wirkt sich auf die Kreiselmessung im Gelenk N wie ein zusätzlicher Verstellwinkel $\Delta\gamma_N$ aus. Aufsummiert über alle inneren Gelenke unter Einbeziehung der Verstellung $\gamma_N$ des Gelenkes N ergibt sich als Sollwinkel für die Kreiselmessung:

$$\alpha_N = \widehat{\gamma}_N = \sum_{n=1}^{N} \gamma_n + \sum_{n=1}^{N-1} \beta_n. \tag{22}$$

Ihm steht die tatsächliche gegenüber:

$$\overset{*}{\alpha}_N = \overset{\wedge}{\gamma}_N + \varepsilon_N, \tag{23}$$

wobei für den Messfehler $\varepsilon_N$ das Modell nach 8 zugrundegelegt wird.

Da der Einfluss der Summe aller Verformungen am äußersten Ende der inneren Glieder

$$\sum_{n=1}^{N} \beta_n$$

den Kreiselmessfehler $\varepsilon_N$ im Gelenk N in der Regel übersteigt, ist es empfehlenswert einen Vorab-Anteil:

$$\sum_{n=1}^{N} \dot{\beta}_n = \sum_{n=1}^{N} \dot{K}_n\, u_n \tag{24}$$

zu kompensieren, so dass die integrierte Signalverarbeitung nur noch dessen Fehler zu ermitteln braucht, wofür als neuer Winkel eingeführt wird:

$$\dot{\psi}_N = \psi_N + \delta\psi_N = \overset{*}{\alpha}_N - \sum_{n=1}^{N} \dot{K}_n\, u_n \tag{25a}$$

mit dem Fehler:

$$\delta\psi_N = \varepsilon_N - \sum_{n=1}^{N} \delta K_n\, u_n. \tag{25b}$$

Für die Fehler $\delta K_n$ der elastischen Koeffizienten wird wie bei Drift und Skalenfaktorfehler wieder ein "random constant" angesetzt; das dynamische Fehlermodell des Kreisels und der elastischen Verformung im Gelenk N wird damit beschrieben durch:

$$\delta \dot{\psi}_N = D_N + \kappa_N \; \dot{\alpha}_N - \sum_{n=1}^{N} \delta K_n \; \dot{u}_n. \tag{26}$$

Bei Verfügbarkeit einer Relativ-Referenzposition in den Gelenken bleiben die Messgleichungen 10, 11, 16 und 17 erhalten, es muss lediglich anstatt der Kreiselmessung $\alpha^*$ mit seinem Fehler $\varepsilon$ der nach 25 und 26 neu definierte Winkel $\psi^*$ und sein Fehler $\delta\psi$ eingesetzt werden.

In gleicher Weise wie beim starren Roboter kann auch beim flexiblen eine Steuerung der kinematischen Kette hinsichtlich Position und Richtung erfolgen unter Einbeziehung der Messung nur eines Kreisels, der am äußeren Ende dieser Kette nahe dem TCP montiert ist. Wenn die Gelenke mit Positionsmesssystemen niedriger Auflösung ausgestattet sind (s. Fig. 2), besteht allerdings eine Einschränkung in der Ansteuerung der Gelenke: sie hat nun sequentiell zu erfolgen. Wie dort erwähnt, existiert diese Einschränkung nur im Zusammenspiel mit Punktuellen Stützsensoren, bei denen die kontinuierliche Ermittlung der Position zwischen den Gelenken und damit der TCP Position und Richtung primär auf den Kreiseln beruht.

Die in Gl. 25 um den Biegeanteil kompensierten Messungen der Gelenkwinkel n $\psi^*_n = \psi_n + \delta\psi_n$ bleiben auch weiterhin die Bezugswinkel. Im Unterschied hierzu stammen sie jedoch nur aus einer Quelle, aus der Messung $\dot{\alpha}^* = \dot{\alpha} + \dot{\varepsilon}$ des Kreisels am äußersten Ende M der kinematischen Kette, die um einen vorab angenommenen Biegeanteil

$$\sum_{n=1}^{M} \dot{K}_n \; u_n$$

aller inneren Gelenke kompensiert ist, das heißt (s. Gl 25a):

$$\dot{\psi}^* = \psi + \delta\psi = \dot{\alpha}^* - \sum_{n=1}^{M} \dot{K}_n \; u_n. \tag{27}$$

Der Winkel des Gelenkes N wird nach den Gln. 18a,b berechnet, wobei $\alpha^*$ durch den neuen Winkel $\psi^*$ ersetzt wird:

$$\dot{\psi}^*_N(t_1) = \dot{\psi}^*_N(t_0) + \int_{t_0}^{t_1} \dot{\psi}^* \Big|_N d\tau$$

$$= \dot{\psi}^*_N(t_0) + \int_{t_0}^{t_1} \left[ \dot{\alpha}^* - \sum_{n=1}^{M} \dot{K}_n \; \dot{u}_n \right] d\tau \Big|_N \tag{28}$$

Hierin ist $\dot{\psi}|_N$ wiederum zu lesen als: "Beitrag der am äußeren Ende ermittelten Winkeländerung $\dot{\psi}$ zur Winkeländerung an der Stelle N".

Der zu schätzende Winkelfehler des Gelenkes N $\delta\psi_N$ wird nach den Gln. 25b und 26 modelliert:

$$\delta\psi_N = \varepsilon \Big|_N - \left[ \sum_{n=1}^{M} \delta K_n \, u_n \right]_N . \tag{29a}$$

dessen dynamisches Fehlermodell ist:

$$\delta \dot{\psi}_N = D\big|_N + \big[\kappa\,\dot{\alpha}^{\,\cdot}\,\big]_N - \left[\sum_{n=1}^{M} \delta K_n\ \dot{u}_n\right]\Bigg|_N . \qquad (29b)$$

Der Drift D und Skalenfaktorfehler $\kappa$ des Kreisels am äußeren Ende der kinematischen Kette sowie die Fehler $\delta K$ der Verformungskoeffizienten werden ermittelt: steht im Gelenk N eine Relativpositionsreferenz zur Verfügung, so dienen die Gln. 10 oder 16 als Messgleichungen zur Schätzung dieser Parameter. Die Auswertung der Messdifferenzen benachbarter Gelenke nach GI. 17 kann entfallen, da berechnete Messdifferenzen für diesen einen Kreisel keine neue Information enthalten.

Da die in Fig. 1 skizzierten Beschleunigungsmesser auf den Biegewinkel reagieren, ist es zweckmäßig, auch deren Signal in die Integration der Messsignale einzubeziehen.

**Bezugszeichenliste**

| 1 | Feststehendes Teil |
|---|---|
| 10 | Relativ zu 1 bewegliches Teil |
| 15 | Drehachse |
| 20 | Inertialsensor |
| 20 x, i | Inertialsensor in Form eines Kreisels auf der Innenseite des Armes x |
| 20 x, o | Inertialsensor in Form eines Kreisels auf der Außenseite des Armes x |
| 30 | Lichtleitfaser |
| 31 | Lichtquelle |
| 32 | Signalgeber |
| 40 | Signalempfänger |
| 41 | Signalempfänger |
| 50 | Auswerteeinheit |
| 60 | Gelenk Nummer x |
| 70 | Arm Nummer |
| 80 | Dehnungsmessstreifen auf Arm Nr. |
| a | Beschleunigung |
| s | Weg |
| v | Geschwindigkeit |
| G | Gewicht |
| $\alpha$ | Drehwinkel |
| $\beta_b$ | Biegung |
| $\beta_t$ | Torsion |
| $\omega$ | Drehrate |

**Patentansprüche**

1. Messanordnung zur Regelung von ausladenden mechanischen Vorrichtungen, insbesondere Robotern, Werkzeugmaschinen und dergleichen, die wenigstens zwei zueinander längs einer geraden oder gekrümmten Bewegungslinie bewegliche Teile (1, 10) besitzen,

   - mit wenigstens einem inertialen Sensor (20) an einem der bewegten Teile (10),
   - mit einem Signalgeber (32),
   - mit wenigstens zwei Signalempfängem (40, 41), die längs der Bewegungslinie angeordnet sind und einen Abstand längs der Bewegungslinie aufweisen und dann, wenn das bewegliche Teil (10) auf seiner Bewegungsbahn mit dem Signalgeber (32) die wenigstens zwei Signaiempfänger (40, 41) überstreicht, jeweils diesbezügliche Messwerte abgeben,
   - mit einer Auswerteeinheit (50), welcher die Messwerte des wenigstens einen inertialen Sensors (20) und der wenigstens zwei Signalempfänger (40, 41) zugeführt werden und welche die Orts- und Bewegungskoordinaten daraus und ggf. aus vorgegebenen Werten ermittelt und Werte für die Regelung der Bewegung des Roboters, der Werkzeugmaschine und dergleichen abgibt.

2. Messanordnung nach Anspruch 1,
**dadurch gekennzeichnet,**
**dass** die wenigstens zwei Signalempfänger (40, 41) jeweils an dem gleichen der beiden Teile (1, 10) angeordnet sind und dass der Signalgeber (32) an dem anderen der beiden Teile (1, 10) längs der gleichen Bewegungslinie angeordnet ist und auf seiner Bewegungsbahn die wenigstens zwei Signalempfänger (40,41) überstreicht.

3. Messanordnung nach Anspruch 2,
**dadurch gekennzeichnet,**
**dass** die Signalempfänger (40, 41) optische Sensoren und die Signalgeber (32) lichtabgebende Elemente sind.

4. Messanordnung nach Anspruch 3,
**dadurch gekennzeichnet,**
**dass** die lichtabgebenden Elemente (32) von einer Lichtquelle (31) gespeiste Enden von Lichtleitfasern (30) sind.

5. Messanordnung nach Anspruch 3 oder 4,
**dadurch gekennzeichnet,**
**dass** die Signalempfänger (40, 41) Differentialphotodioden sind.

6. Messanordnung nach einem der vorstehenden Ansprüche,
**dadurch gekennzeichnet,**
**dass** der oder die inertialen Sensoren (20) Kreisel und/oder Beschleunigungsmesser aufweisen.

7. Messanordnung nach einem der vorstehenden Ansprüche,
**dadurch gekennzeichnet,**
**dass** der oder einer der inertialen Sensoren (20) am äußersten Ende des äußersten Elementes der kinematischen Kette angeordnet ist.

8. Messanordnung nach einem der vorstehenden Ansprüche,
**dadurch gekennzeichnet,**
**dass** zusätzlich Messgeräte zur Erfassung verformungswirksamer Ereignisse vorgesehen sind.

9. Messanordnung nach Anspruch 8,
**dadurch gekennzeichnet,**
**dass** die Messgeräte Dehnungsmessstreifen (80) für belastungsabhängige Biegungen sind.

10. Messanordnung nach Anspruch 8 oder 9,
**dadurch gekennzeichnet,**
**dass** jedes flexible kinematische Element wenigstens zwei Inertialsensoren (20) trägt, insbesondere an oder benachbart zu seinen Enden und/oder außerhalb auf verschiedenen Seiten des Verformungsbereiches.

11. Verfahren zur Messung der Bewegung mit einer Messanordnung nach einem der vorstehenden Ansprüche,
**dadurch gekennzeichnet,**
**dass** die Messwerte des inertialen Sensors (20) und gegebenenfalls der Signalempfänger (41, 42) der Auswerteeinheit (50) zugeführt werden und dass die Auswerteeinheit (50) aus diesen Messwerten und aus vorgegebenen Werten die Orts- und Bewegungskoordinaten ermittelt.

12. Verfahren nach Anspruch 11,
**dadurch gekennzeichnet,**
**dass** ein Verformungsmessgerät, insbesondere ein Dehnungsmessstreifen (80), oder eine andere Verformungsdaten liefernde Einrichtung, insbesondere ein Torque-Motor in den Gelenken (60), der Auswerteeinheit (50) Daten über die Verformung eines der zueinander beweglichen Teile (1, 10) zuführt und die Auswerteeinheit (50) diese Daten für die Berechnung der Positions- und Bewegungskoordinaten mit berücksichtigt.

13. Verfahren nach einem der Ansprüche 11 bis 12,
**dadurch gekennzeichnet,**
**dass** Steuerungsdaten für den Stillstand eines der kinematischen Elemente und/oder für eine gleichförmige Bewegung mehrerer kinematischer Elemente miteinander der Auswerteeinheit (50) zugeführt und mit berücksichtigt werden.

14. Verfahren nach einem der Ansprüche 11 bis 13,
**dadurch gekennzeichnet,**
**dass** eine Kalibrierung der Untersysteme erfolgt, insbesondere dass eine Kalibrierung der Signalempfänger (40, 41) durch einen inertialen Referenzsensor an dem zu kalibrierenden beweglichen Teil (1, 10) erfolgt, wobei die Messwerte der Signalempfänger (40, 41) und des Referenzsensors der Auswerteeinheit (50) zugeführt werden, das bewegliche Teil (1, 10) über die Signalempfänger (40, 41) gefahren und aus den Messwerten die Position der Signalempfänger (40, 41) bestimmt werden.

**Claims**

1. Measuring arrangement for controlling extending mechanical apparatuses, in particular robots, machine tools and the like, which possess at least two parts (1, 10) that are movable relative to one another along a straight or curved line of motion,

   - having at least one inertial sensor (20) on one of the moving parts (10),
   - having a signal transmitter (32).
   - having at least two signal receivers (40, 41), which are disposed along the line of motion and have a spacing along the line of motion and which, each time the movable part (10) along its path of motion sweeps with the signal transmitter (32) over the at least two signal receivers (40, 41), supply measured values relating thereto,
   - having an evaluation unit (50), to which the measured values of the at least one inertial sensor (20) and of the at least two signal receivers (40, 41) are supplied and which from these measured values and optionally from defined values determines the location- and travel coordinates and supplies values for controlling the movement of the robot, the machine tool and the like.

2. Measuring arrangement according to claim 1,
**characterized in**
**that** the at least two signal receivers (40, 41) are each disposed on the same one of the two parts (1, 10) and that the signal transmitter (32) is disposed on the other of the two parts (1, 10) along the same line of motion and along its path of motion sweeps over the at least two signal receivers (40, 41).

3. Measuring arrangement according to claim 2,
**characterized in**
**that** the signal receivers (40, 41) are optical sensors and the signal transmitters (32) are light-emitting elements.

4. Measuring arrangement according to claim 3,
**characterized in**
**that** the light-emitting elements (32) are ends of optical fibres (30) that are supplied from a light source (31).

5. Measuring arrangement according to claim 3 or 4,
**characterized in**
**that** the signal receivers (40, 41) are differential photodiodes.

6. Measuring arrangement according to one of the preceding claims,
**characterized in**
**that** the inertial sensor or sensors (20) comprise gyroscopes and/or accelerometers.

7. Measuring arrangement according to one of the preceding claims,
**characterized in**
**that** the inertial sensor or one of the inertial sensors (20) is disposed at the outermost end of the outermost element of the kinematic chain.

8. Measuring arrangement according to one of the preceding claims,
**characterized in**
**that** measuring instruments for detecting deformation-effective events are additionally provided.

**9.** Measuring arrangement according to claim 8,
**characterized in**
**that** the measuring instruments are strain gauges (80) for load-dependent bending.

**10.** Measuring arrangement according to claim 8 or 9,
**characterized in**
**that** each flexible kinematic element carries at least two inertial sensors (20), in particular at or adjacent to its ends and/or outside at different sides of the deformation area.

**11.** Method of measuring motion by means of a measuring arrangement according to one of the preceding claims,
**characterized in**
**that** the measured values of the inertial sensor (20) and optionally of the signal receivers (40, 41) are supplied to the evaluation unit (50) and that the evaluation unit (50) from these measured values and from defined values determines the location- and travel coordinates.

**12.** Method according to claim 11,
**characterized in**
**that** a deformation measuring instrument, in particular a strain gauge (80), or another device supplying deformation data, in particular a torque motor in the joints (60), supplies data regarding the deformation of one of the relatively movable parts (1, 10) to the evaluation unit (50) and the evaluation unit (50) also takes these data into account when calculating the position- and travel coordinates.

**13.** Method according to one of claims 11 to 12,
**characterized in**
**that** control data for the stopping one of the kinematic elements and/or for a uniform movement of a plurality of kinematic elements with one another are supplied to the evaluation unit (50) and also taken into account.

**14.** Method according to one of claims 11 to 13,
**characterized in**
**that** a calibration of the subsystems is effected, in particular that a calibration of the signal receivers (40, 41) is effected by means of an inertial reference sensor on the movable part (1, 10) to be calibrated, wherein the measured values of the signal receivers (40, 41) and of the reference sensor are supplied to the evaluation unit (50), the movable part (1, 10) is moved over the signal receivers (40, 41) and from the measured values the position of the signal receivers (40, 41) is determined.

**Revendications**

**1.** Système de mesure pour le réglage des dispositifs mécaniques s'étendant en porte à faux, en particulier des robots, machines-outils et similaires, qui possèdent au moins deux parties mobiles (1, 10) entre elles le long d'une ligne de mouvement droite ou incurvée,

- avec au moins un capteur inertiel (20) sur une des parties mobiles (10),
- avec un générateur de signaux (32),
- avec au moins deux récepteurs de signaux (40, 41) qui sont agencés le long de la ligne de mouvement et comportent une distance le long de la ligne de mouvement, puis, lorsque la partie mobile (10) sur sa voie de mouvement couvre avec le générateur de signaux (32) les au moins deux récepteurs de signaux (40, 41), émettent respectivement les valeurs de mesure concernées,
- avec une unité d'évaluation (50) à laquelle sont fournies les valeurs de mesure du au moins un capteur inertiel (20) et des au moins deux récepteurs de signaux (40, 41), et laquelle transmet à partir de ces valeurs et éventuellement à partir de valeurs prédéfinies les coordonnées de position et de mouvement, et émet les valeurs pour le réglage du mouvement du robot, de la machine-outil et similaires.

**2.** Système de mesure selon la revendication 1,
**caractérisé en ce que**,
les au moins deux récepteurs de signaux (40, 41) sont disposés chacun sur la même partie des deux parties (1, 10), et **en ce que** le générateur de signaux (32) est disposé sur l'autre des deux parties (1, 10) le long de la même ligne de mouvement, et couvre sur sa voie de mouvement les au moins deux récepteurs de signaux (40, 41).

**3.** Système de mesure selon la revendication 2,
**caractérisé en ce que**,
les récepteurs de signaux (40, 41) sont des capteurs optiques et les générateurs de signaux (32) sont des éléments émettant de la lumière.

**4.** Système de mesure selon la revendication 3,
**caractérisé en ce que**,
les éléments émettant de la lumière (32) sont les extrémités alimentées par une source lumineuse (31) de fibres optiques (30).

**5.** Système de mesure selon la revendication 3 ou 4,
**caractérisé en ce que**,
les récepteurs de signaux (40, 41) sont des photodiodes différentielles.

**6.** Système de mesure selon une des revendications précédentes,
**caractérisé en ce que**,
le ou les capteurs inertiels (20) comprend(comprennent) des gyroscopes et/ou des accéléromètres.

**7.** Système de mesure selon une des revendications précédentes,
**caractérisé en ce que**,
le ou un des capteurs inertiels (20) est disposé sur l'extrémité la plus externe de l'élément le plus externe de la chaîne cinématique.

**8.** Système de mesure selon une des revendications précédentes,
**caractérisé en ce que**,
des appareils de mesure sont en plus prévus pour la détection des événements actifs en terme de déformation.

**9.** Système de mesure selon la revendication 8,
**caractérisé en ce que**,
les appareils de mesure sont des jauges de contrainte (80) pour les flexions liées aux charges.

**10.** Système de mesure selon la revendication 8 ou 9,
**caractérisé en ce que**,
chaque élément cinématique flexible supporte au moins deux capteurs inertiels (20), en particulier sur ou à proximité de ses extrémités et/ou à l'extérieur sur différentes faces de la zone de déformation.

**11.** Procédé de mesure du mouvement avec un système de mesure selon une des revendications précédentes,
**caractérisé en ce que**,
les valeurs de mesure du capteur inertiel (20) et éventuellement des récepteurs de signaux (41, 42) sont fournies à l'unité d'évaluation (50), et **en ce que** l'unité d'évaluation (50) transmet les coordonnées de position et de mouvement à partir de ces valeurs de mesure et de valeurs prédéfinies.

**12.** Procédé selon la revendication 11,
**caractérisé en ce que**,
un appareil de mesure de la déformation, en particulier une jauge de contrainte (80), ou une autre installation fournissant des données sur la déformation, en particulier un moteur couple dans les joints d'accouplement (60), fournit des données sur la déformation d'un des parties mobiles entre elles (1, 10) à l'unité d'évaluation (50), et l'unité d'évaluation (50) prend en compte ces données pour le calcul des coordonnées de position et de mouvement.

**13.** Procédé selon une des revendications 11 à 12,
**caractérisé en ce que**,
des données de commande pour l'arrêt d'un des éléments cinématiques et/ou pour un mouvement uniforme de plusieurs éléments cinématiques sont fournies ensemble à l'unité d'évaluation (50) et prises en compte.

**14.** Procédé selon une des revendications 11 à 13,
**caractérisé en ce que**,

un calibrage des sous-systèmes a lieu, en particulier **en ce qu'**un calibrage des récepteurs de signaux (40, 41) est effectué par un capteur de référence inertiel au niveau de la partie mobile (1, 10) devant être calibrée, sachant que les valeurs de mesure des récepteurs de signaux (40, 41) et du capteur de référence sont fournies à l'unité d'évaluation (50), la partie mobile (1, 10) passe par les récepteurs de signaux (40, 41), et la position des récepteurs de signaux (40, 41) est définie à partir des valeurs de mesure.

Fig. 1

**Fig. 2**

EP 1 041 474 B1

**Fig. 3**

**Fig. 4**

Fig. 5

Fig. 6

Fig. 7

Fig. 8

26